# EUROPÄISCHE PATENTSCHRIFT

(11) **EP 3 230 607 B1**
(45) Veröffentlichungstag und Bekanntmachung des Hinweises auf die Patenterteilung: **25.09.2019**
(21) Anmeldenummer: 15791302.1
(22) Anmeldetag: 10.11.2015
(51) Int. Cl.: F16C 11/06, F16C 11/08

(54) **KUGELGELENK**
BALL AND SOCKET JOINT
JOINT SPHÉRIQUE

(30) Priorität: 09.12.2014 DE 102014225312
(43) Veröffentlichungstag der Anmeldung: 18.10.2017
(73) Patentinhaber: ZF Friedrichshafen AG, 88046 Friedrichshafen (DE)
(72) Erfinder: SOKOLIHS, Dirk, 32457 Porta Westfalica (DE); PETERSEN, Uwe, 32339 Espelkamp (DE); REDDEHASE, Günter, 49448 Brockum (DE)
(86) Internationale Anmeldenummer: PCT/EP2015/076125
(87) Internationale Veröffentlichungsnummer: WO 2016/091511

(56) Entgegenhaltungen:
- US-A- 4 003 667

## Beschreibung

Die Erfindung betrifft ein Kugelgelenk mit einem einen Gehäuseboden umfassenden Gelenkgehäuse, einem eine Gelenkkugel umfassenden Gelenkinnenteil, welches mit seiner Gelenkkugel in dem Gelenkgehäuse angeordnet ist und sich aus diesem heraus erstreckt, einem elastischen und in dem Gelenkgehäuse zwischen der Gelenkkugel und dem Gehäuseboden angeordneten Profilring, der an seiner Innenseite einen Anlagebereich umfasst und mit diesem an der Gelenkkugel abgestützt ist, einer in dem Gelenkgehäuse zwischen der Gelenkkugel und dem Gehäuseboden vorgesehenen Schmiermittelkammer, einem in dem Gelenkgehäuse auf einer dem Gehäuseboden abgewandten Seite des Profilrings vorgesehenen Lagerbereich, an welchem die Gelenkkugel gelenkig gelagert ist, einem in dem Gelenkgehäuse zwischen dem Profilring und dem Lagerbereich vorgesehenen Zwischenraum und wenigstens einer in der Oberfläche des Profilrings vorgesehenen und die Schmiermittelkammer mit dem Zwischenraum verbindenden Schmiermittelnut, die entlang einer dem Gelenkgehäuse zugewandten Außenseite des Profilrings verläuft.

Aus der DE 10 2009 002 565 A1 ist ein Kugelgelenk mit einem Gehäuse bekannt, in dem die Gelenkkugel eines mit der Gelenkkugel ausgestatteten Kugelzapfens drehbar und schwenkbar gelagert ist, wobei ein zwischen dem Gehäuse und einem zapfenförmigen Abschnitt des Kugelzapfens angeordneter Dichtungsbalg mit einem Schmiermittel gefüllt ist und damit zumindest ein Schmiermittelreservoir bildet und der Kugelzapfen wenigstens einen Strömungskanal zum Transport des Schmiermittels innerhalb des Kugelgelenkes aufweist, und wobei das Schmiermittel mit Überdruck durch ein am Kugelgelenk vorhandenes Einwegventil in Bewegung versetzbar ist. Die Gelenkkugel ist in einer in das Gehäuse eingesetzten Lagerschale aufgenommen, die ihrerseits zumindest einen Strömungskanal aufweist. Dabei weist die Lagerschale neben einem Strömungskanal auf ihrer Gehäuseseite auch auf der Seite ihres Lagerbereiches einen Strömungskanal auf.

Bei diesem Kugelgelenk hat sich herausgestellt, dass die in der Lagerschale vorgesehenen Strömungskanäle im montierten Zustand des Kugelgelenks teilweise verschlossen sind. Dies liegt daran, dass die Lagerschale während der Montage unter Druckspannung gesetzt wird, die nach dem Verschließen des Gehäuses verbleibt. Aufgrund dieser Druckspannung verformt sich die Lagerschale derart, dass sich die Strömungskanäle, insbesondere an ihren Enden, schließen können. Ein Transport von Schmiermittel zu der Gelenkkugel ist dann nicht mehr möglich, ohne die Spannung in der Lagerschale zu reduzieren.

Ausgehend hiervon liegt der Erfindung die Aufgabe zugrunde, bei einem Kugelgelenk der eingangs genannten Art zwischen der Schmiermittelkammer und dem Zwischenraum Schmiermittel austauschen zu können, ohne den Spannungszustand des Profilrings verändern zu müssen.

Diese Aufgabe wird durch ein Kugelgelenk nach Anspruch 1 gelöst. Bevorzugte Weiterbildungen des Kugelgelenks sind in den Unteransprüchen und in der nachfolgenden Beschreibung gegeben.

Das Kugelgelenk weist ein einen Gehäuseboden umfassendes Gelenkgehäuse, ein eine Gelenkkugel umfassendes Gelenkinnenteil, welches mit seiner Gelenkkugel in dem Gelenkgehäuse angeordnet ist und sich aus diesem heraus erstreckt, einen elastischen und in dem Gelenkgehäuse zwischen der Gelenkkugel und dem Gehäuseboden angeordneten Profilring, der an seiner Innenseite einen Anlagebereich umfasst und mit diesem, insbesondere zumindest bereichsweise, an der Gelenkkugel abgestützt ist, eine in dem Gelenkgehäuse zwischen der Gelenkkugel und dem Gehäuseboden vorgesehene Schmiermittelkammer, einen in dem Gelenkgehäuse auf einer dem Gehäuseboden abgewandten Seite des Profilrings vorgesehenen Lagerbereich, an oder in welchem die Gelenkkugel gelenkig gelagert ist, einen in dem Gelenkgehäuse zwischen dem Profilring und dem Lagerbereich vorgesehenen Zwischenraum und wenigstens eine in der Oberfläche des Profilrings vorgesehene und die Schmiermittelkammer mit dem Zwischenraum verbindende Schmiermittelnut auf, die entlang einer dem Gelenkgehäuse zugewandten Außenseite des Profilrings verläuft, wobei die Schmiermittelnut sowohl im Bereich der Schmiermittelkammer als auch im Bereich des Zwischenraums bis zu der Innenseite des Profilrings und/oder bis zu dem Anlagebereich verläuft.

Da die Schmiermittelnut sowohl im Bereich der Schmiermittelkammer als auch im Bereich des Zwischenraums bis zu der Innenseite des Profilrings und/oder bis zu dem Anlagebereich verläuft, wird ein Austausch von Schmiermittel zwischen der Schmiermittelkammer und dem Zwischenraum ermöglicht, insbesondere auch dann, wenn der Profilring unter Druckspannung steht und gegenüber seiner ursprünglichen Form verformt ist.

Gemäß einer Weiterbildung verläuft die Schmiermittelnut, vorzugsweise insgesamt, in einer die Rotationsachse des Profilrings umfassenden Ebene (Nutebene). Somit liegen einem an der Außenseite des Profilrings verlaufenden Außenabschnitt der Schmiermittelnut an der Innenseite des Profilrings verlaufende Innenabschnitte der Schmiermittelnut gegenüber. Hierdurch wird ein Austausch von Schmiermittel zwischen der Schmiermittelkammer und dem Zwischenraum selbst dann ermöglicht, wenn der Profilring unter höherer Druckspannung steht.

Die Schmiermittelnut ist beispielsweise umlaufend und/oder als Ringnut ausgebildet. Gemäß einer Ausgestaltung ist die Schmiermittelnut bis auf einen den Verlauf der Schmiermittelnut unterbrechenden Stützbereich umlaufend ausgebildet, der insbesondere an der Innenseite des Profilrings vorgesehen ist. Bevorzugt verläuft die Schmiermittelnut sowohl im Bereich der Schmiermittelkammer als auch im Bereich des Zwischenraums bis zum Stützbereich. Insbesondere endet die Schmiermittelnut sowohl im Bereich der Schmiermittelkammer als auch im Bereich des Zwischenraums am Stützbereich. Vorteilhaft ist der Profilring mit dem Stützbereich oder zumindest mit dem Stützbereich an der Gelenkkugel abgestützt. Der Stützbereich erhöht insbesondere die Formstabilität des Profilrings im Bereich der Schmiermittelnut. Auch hierdurch wird ein Austausch von Schmiermittel zwischen der Schmiermittelkammer und dem Zwischenraum ermöglicht, wenn der Profilring unter höherer Druckspannung steht. Vorzugsweise dichtet der Stützbereich den Zwischenraum gegenüber der Schmiermittelkammer im Bereich der Gelenkkugel ab. Hierdurch kann insbesondere erreicht werden, dass ein Austausch von Schmiermittel zwischen der Schmiermittelkammer und dem Zwischenraum durch die Schmiermittelnut ausschließlich über die Außenseite des Profilrings erfolgt. Der Stützbereich ist bevorzugt in der Nutebene vorgesehen und/oder liegt in der Nutebene und/oder verläuft durch die Nutebene. Vorteilhaft ist der Stützbereich, insbesondere in Bezug auf die Rotationsachse des Profilrings, umlaufend ausgebildet. Der Profilring ist in Bezug auf seine Rotationsachse mit dem Stützbereich umlaufend an der Gelenkkugel abgestützt. Der Anlagebereich umfasst oder bildet den Stützbereich.

Gemäß einer Weiterbildung liegt der Stützbereich innerhalb des Anlagebereichs, wobei sich die Schmiermittelnut im Bereich der Schmiermittelkammer und/oder im Bereich des Zwischenraums bevorzugt in den Anlagebereich hinein erstreckt. Dies ist insbesondere dann der Fall, wenn der Profilring unter Druckspannung steht und dadurch verformt ist. Vorteilhaft ist der Anlagebereich, insbesondere in Bezug auf die Rotationsachse des Profilrings, umlaufend ausgebildet. Beispielsweise ist der Profilring, insbesondere in Bezug auf seine Rotationsachse, mit dem Anlagebereich umlaufend an der Gelenkkugel abgestützt. Verläuft die Schmiermittelnut durch den Anlagebereich bis zum Stützbereich, ist der Profilring in den Bereichen des Anlagebereichs, in denen die Schmiermittelnut verläuft, insbesondere nicht an der Gelenkkugel abgestützt. Zwischen dem Profilring und der Gelenkkugel ist beispielsweise ein Lagerelement angeordnet, sodass der Profilring mit seinem Anlagebereich unter Zwischenschaltung des Lagerelements an der Gelenkkugel abgestützt ist. Das Lagerelement ist z.B. eine Lagerschale. Beispielsweise besteht das Lagerelement aus Kunststoff oder aus Metall. Bevorzugt ist der Profilring aber mit dem Anlagebereich unmittelbar an der Gelenkkugel abgestützt.

Die Schmiermittelkammer ist bevorzugt, insbesondere umfangsseitig, durch den Profilring begrenzt. Ferner ist die Schmiermittelkammer bevorzugt durch den Gehäuseboden begrenzt. Vorteilhaft ist die Schmiermittelkammer auch durch die Gelenkkugel und/oder das Lagerelement begrenzt. Bevorzugt sitzt der Profilring zwischen der Schmiermittelkammer und dem Zwischenraum und/oder der Profilring ist zwischen der Schmiermittelkammer und dem Zwischenraum angeordnet und/oder die Schmiermittelkammer ist von dem Zwischenraum durch den Profilring getrennt. Insbesondere ist die Schmiermittelkammer von dem Zwischenraum ferner durch die Gelenkkugel und/oder den Lagerbereich getrennt.

Bevorzugt ist in die Schmiermittelkammer und/oder in den Zwischenraum Schmiermittel eingebracht. Insbesondere ist an dem Gehäuseboden ein in die Schmiermittelkammer mündendes und von außen zugängliches Schmiermittelventil befestigt, durch welches hindurch Schmiermittel von außen in die Schmiermittelkammer einbringbar ist. Somit kann dem Kugelgelenk Schmiermittel zugeführt werden.

Der Lagerbereich kann durch eine Innenfläche des Gelenkgehäuses gebildet sein, an welcher die Gelenkkugel vorzugsweise gleitfähig anliegt. Bevorzugt ist in das Gelenkgehäuse aber eine den Lagerbereich umfassende Lagerschale eingesetzt, die insbesondere aus Kunststoff oder aus Metall besteht. In diesem Fall ist der Lagerbereich bevorzugt durch eine Innenfläche der Lagerschale gebildet, wobei diese Innenfläche vorzugsweise gleitfähig an der Gelenkkugel anliegt.

Das Gelenkinnenteil umfasst bevorzugt einen, insbesondere starr, mit der Gelenkkugel verbundenen Anschlussteil, der z.B. in Form einer Hülse, eines Bolzens oder eines Zapfens ausgebildet ist. Vorteilhaft erstreckt sich das Gelenkinnenteil mit seinem Anschlussteil aus dem Gelenkgehäuse heraus und/oder der Anschlussteil ist zumindest bereichsweise außerhalb des Gelenkgehäuses angeordnet. Der Anschlussteil dient insbesondere dazu, das Gelenkinnenteil mit einem anderen Bauteil verbinden zu können. Ist die den Lagerbereich umfassende Lagerschale vorhanden, so weist diese bevorzugt eine Durchgangsöffnung auf, durch welche sich das Gelenkinnenteil, insbesondere mit seinem Anschlussteil, hindurch erstreckt. Vorzugsweise umringt der Lagerbereich die Durchgangsöffnung und/oder die Durchtrittsöffnung.

Der Profilring besteht aus einem Elastomer oder Gummi.

Gemäß einer Weiterbildung steht der Profilring, vorzugsweise in Richtung seiner Rotationsachse, unter Druckspannung, sodass er mit seinem Anlagebereich gegen die Gelenkkugel, beispielsweise unmittelbar oder unter Zwischenschaltung des Lagerelements, gedrückt ist. Insbesondere ist der Profilring aufgrund der Druckspannung gegenüber seiner ursprünglichen Form verformt.

Bevorzugt ist der Profilring, insbesondere in seinem unverformten Zustand, zu einer quer zur Rotationsachse des Profilrings verlaufenden Symmetrieebene spiegelsymmetrisch ausgebildet. Beispielsweise ist die Schmiermittelnut, insbesondere im unverformten Zustand des Profilrings, umlaufend ausgebildet. Vorteilhaft ist die Schmiermittelnut, insbesondere im unverformten Zustand des Profilrings, bis auf den oder einen den Verlauf der Schmiermittelnut unterbrechenden Stützbereich umlaufend ausgebildet, der insbesondere an der Innenseite des Profilrings vorgesehen ist. Bevorzugt ist der Stützbereich, insbesondere im unverformten Zustand des Profilrings, bezüglich der Rotationsachse des Profilrings umlaufend ausgebildet. Vorzugsweise liegt der Stützbereich, insbesondere im unverformten Zustand des Profilrings, in der Symmetrieebene des Profilrings. Bevorzugt weist die Schmiermittelnut, insbesondere im unverformten Zustand des Profilrings, einen C-förmigen Verlauf auf. Vorteilhaft verläuft die Außenfläche und/oder Außenumfangsfläche des Profilrings, insbesondere in seinem unverformten Zustand, in oder zumindest bereichsweise in Richtung der Rotationsachse des Profilrings. Ferner weist der Profilring, insbesondere in seinem unverformten Zustand, im Bereich der Schmiermittelnut bevorzugt einen näherungsweise dreieckigen Querschnitt auf, wobei eine der Dreiecksseiten dieses Querschnitts radial außen liegt und in Richtung der Rotationsachse des Profilrings verläuft. Unter "radial" ist insbesondere eine Richtung oder jedwede Richtung zu verstehen, die quer zur Rotationsachse des Profilrings verläuft. Vorzugsweise liegt, insbesondere im unverformten Zustand des Profilrings, eine der radial außen liegenden Dreiecksseite gegenüberliegende Ecke dieses dreieckigen Querschnitts im Stützbereich, wobei die Ecke vorzugsweise abgerundet ist. Vorteilhaft weist der Profilring, insbesondere in seinem unverformten Zustand, am Stützbereich seinen kleinsten Innendurchmesser auf. Bevorzugt nimmt der Innendurchmesser des Profilrings, insbesondere in seinem unverformten Zustand, vom Stützbereich aus in Richtung der Rotationsachse des Profilrings mit zunehmendem Abstand zum Stützbereich beidseitig zu.

Das Gelenkgehäuse umfasst bevorzugt eine Durchtrittsöffnung, durch welche sich das Gelenkinnenteil aus dem Gehäuse heraus erstreckt. Die Durchtrittsöffnung liegt vorzugsweise dem Gehäuseboden, insbesondere in einer Längsrichtung, gegenüber. Vorteilhaft verläuft die Rotationsachse des Profilrings in Längsrichtung. Das Gehäuse besteht bevorzugt aus Metall, insbesondere aus Stahl.

Bevorzugt ist die Durchtrittsöffnung durch eine das Gelenkinnenteil umringende Dichtung abgedeckt, die sowohl an dem Gelenkgehäuse als auch an dem Gelenkinnenteil dichtend anliegt. Insbesondere ist die Dichtung am Gelenkgehäuse befestigt. Bei der Dichtung handelt es sich z.B. um einen Dichtungsbalg. Vorteilhaft besteht die Dichtung aus einem elastischen Werkstoff. Beispielsweise besteht die Dichtung aus einem Elastomer oder Gummi und/oder aus einem elastischen Kunststoff.

Gemäß einer Weiterbildung weist das Gelenkgehäuse eine Montageöffnung auf, die vorzugsweise der Durchtrittsöffnung, insbesondere in Längsrichtung, gegenüberliegt. Bevorzugt ist die Montageöffnung durch einen Gehäusedeckel abgedeckt, der insbesondere den Gehäuseboden oder einen Teil des Gehäusebodens bildet. Der Gehäusedeckel besteht bevorzugt aus Metall, insbesondere aus Stahl.

Das Gelenkinnenteil ist bevorzugt ein Kugelzapfen. Vorzugsweise besteht das Gelenkinnenteil aus Metall, insbesondere aus Stahl.

Dem Kugelgelenk und/oder dem Gelenkgehäuse ist bevorzugt eine in Längsrichtung verlaufende Mittellängsachse zugeordnet, die vorzugsweise durch den Mittelpunkt der Gelenkkugel verläuft. Insbesondere fällt die Mittellängsachse mit der Rotationsachse des Profilrings zusammen.

Das Kugelgelenk ist insbesondere für ein Fahrzeug, beispielsweise für ein Kraftfahrzeug vorgesehen. Vorteilhaft ist das Kugelgelenk in das oder in ein Fahrzeug eingebaut, insbesondere in eine Radaufhängung oder Achsaufhängung des Fahrzeugs.

Die Erfindung wird nachfolgend anhand einer bevorzugten Ausführungsform unter Bezugnahme auf die Zeichnung beschrieben. In der Zeichnung zeigen:
- Fig. 1: eine perspektivische Ansicht eines Kugelgelenks gemäß einer Ausführungsform,
- Fig. 2: eine perspektivische und teilweise geschnittene Ansicht des Kugelgelenks, wobei ein Profilring im montierten Zustand ersichtlich ist,
- Fig. 3: eine perspektivische Ansicht des Profilrings vor der Montage,
- Fig. 4: einen Schnitt durch den Profilring entlang der aus Fig. 3 ersichtlichen Schnittlinie A-A und
- Fig. 5: eine teilweise Schnittansicht des Kugelgelenks im teilmontierten Zustand.

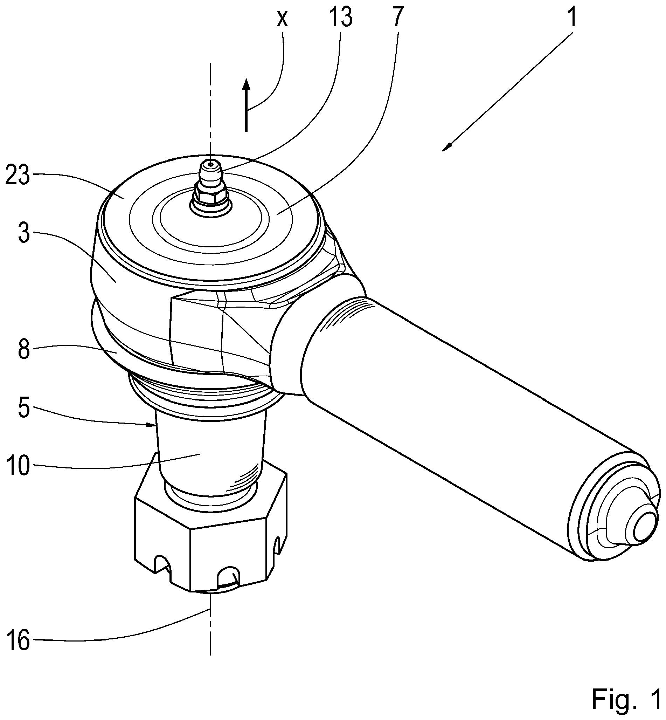

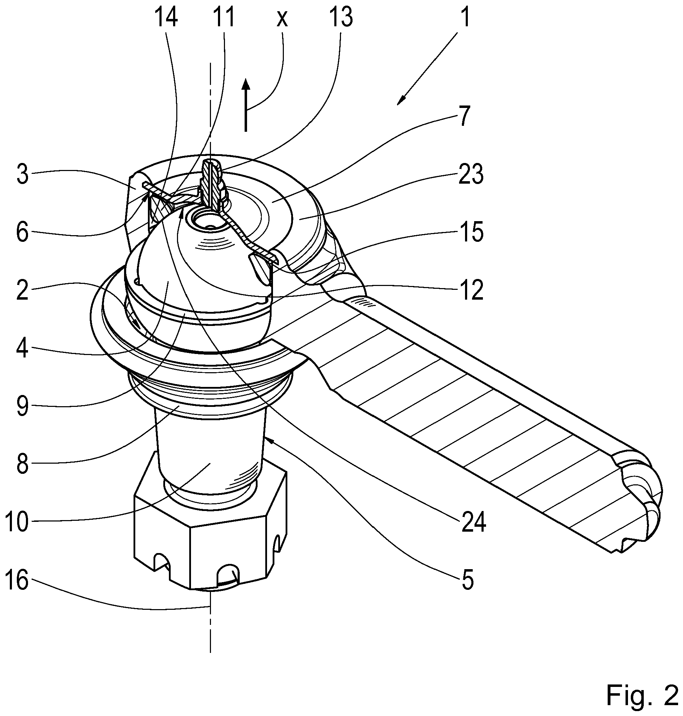

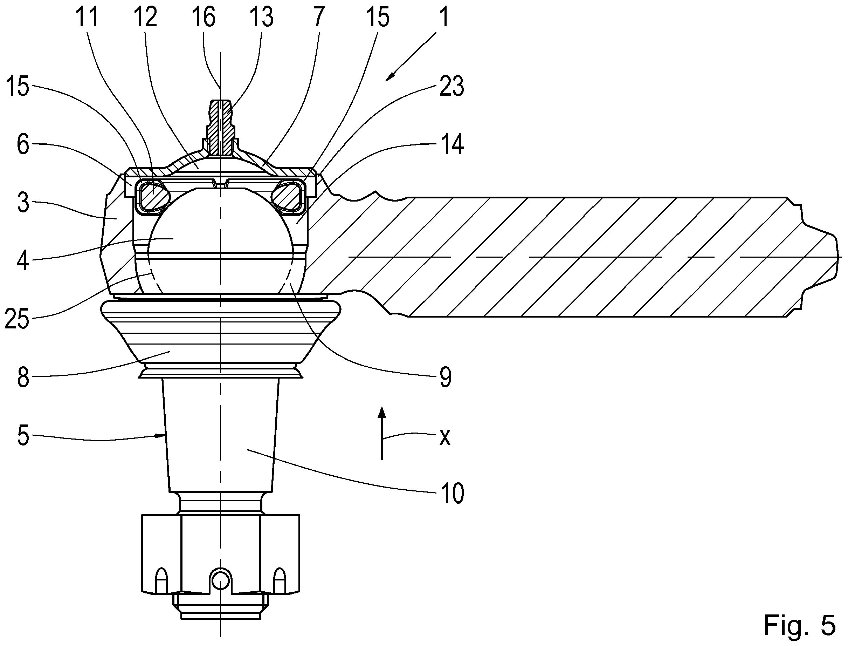

Aus den Fig. 1 und 2 sind unterschiedliche Ansichten eines Kugelgelenks 1 gemäß einer Ausführungsform ersichtlich, wobei Fig. 5 das Kugelgelenk 1 im teilmontierten Zustand zeigt. Das Kugelgelenk 1 weist ein eine Durchtrittsöffnung 2 umfassendes Gelenkgehäuse 3 und einen eine Gelenkkugel 4 umfassenden Kugelzapfen 5 auf, der mit seiner Gelenkkugel 4 gelenkig in dem Gelenkgehäuse 3 gelagert ist und sich aus diesem durch die Durchtrittsöffnung 2 hindurch heraus erstreckt, sodass der Kugelzapfen 5 mit einem Zapfenbereich 10 außerhalb des Gelenkgehäuses 3 angeordnet ist. Das Gelenkgehäuse 3 weist ferner eine Montageöffnung 6 auf, die der Durchtrittsöffnung 2 in einer Längsrichtung x gegenüberliegt und durch einen Gehäusedeckel 7 verschlossen ist, der einen Gehäuseboden des Gelenkgehäuses 3 bildet. Die Durchtrittsöffnung 2 ist durch einen Dichtungsbalg 8 abgedeckt, durch welchen sich der Kugelzapfen 5 hindurch erstreckt, wobei der Dichtungsbalg 8 an dem Gelenkgehäuse 3 befestigt ist und sowohl an dem Gelenkgehäuse 3 als auch an dem Kugelzapfen 5 dichtend anliegt. Der Kugelzapfen 5 sitzt mit seiner Gelenkkugel 4 gleitfähig in einer in dem Gelenkgehäuse 3 angeordneten Lagerschale 9 und erstreckt sich durch eine in der Lagerschale 9 vorgesehene Durchgangsöffnung hindurch. Die der Gelenkkugel 4 zugewandte Innenfläche der Lagerschale 9 liegt an der Gelenkkugel 4 an und bildet einen Lagerbereich 25 für die Gelenkkugel 4, der in Fig. 5 gestrichelt angedeutet ist. Dem Kugelgelenk 1 ist eine Mittellängsachse 16 zugeordnet, die in Längsrichtung x verläuft.

Zwischen der Gelenkkugel 4 und dem Gehäusedeckel 7 ist ein elastischer Profilring 11 angeordnet, der sowohl an dem Gehäusedeckel 7 als auch an der Gelenkkugel 4 anliegt. Ferner ist zwischen der Gelenkkugel 4 und dem Gehäusedeckel 7 eine Schmiermittelkammer 12 vorgesehen, die umfangsseitig durch den Profilring 11 begrenzt ist. Dabei ist der Gehäusedeckel 7 mittig nach außen gewölbt, sodass die Schmiermittelkammer 12 ein möglichst großes Volumen aufweist. Ferner ist an dem Gehäusedeckel 7 ein in die Schmiermittelkammer 12 mündendes Schmiermittelventil 13 befestigt, durch welches Schmiermittel von außen in die Schmiermittelkammer 12 eingebracht werden kann.

Zwischen dem Profilring 11 und der Lagerschale 9 ist ein Zwischenraum 14 vorgesehen, wobei die Schmiermittelkammer 12 durch an der Oberfläche des Profilrings 11 vorgesehene Schmiermittelnuten 15 mit dem Zwischenraum 14 verbunden ist, sodass durch das Schmiermittelventil 13 in die Schmiermittelkammer 12 eingedrücktes Schmiermittel von der Schmiermittelkammer 12 durch die Schmiermittelnuten 15 in den Zwischenraum 14 eingebracht werden kann.

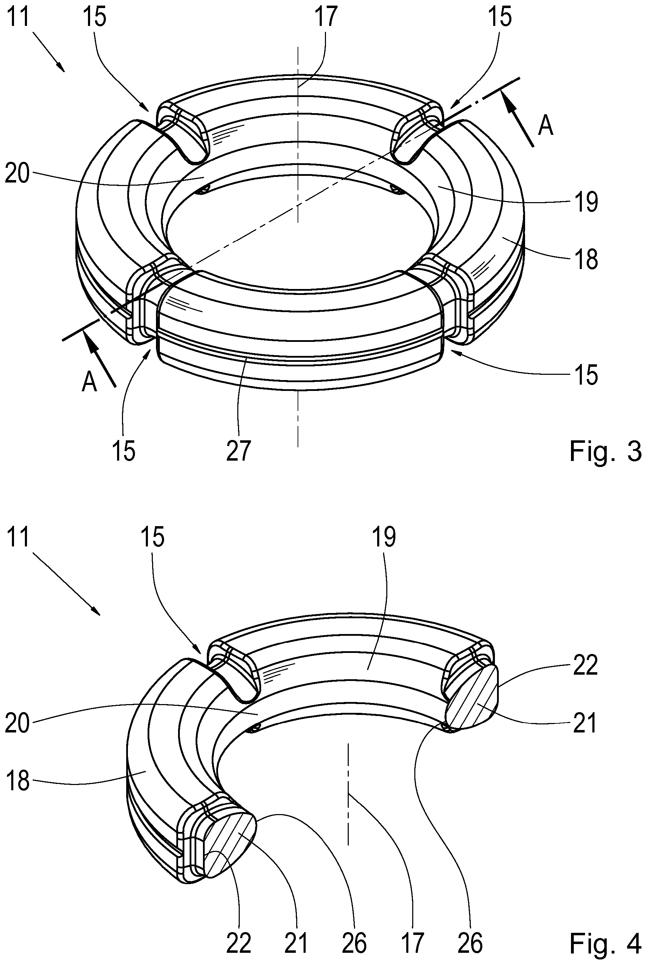

Im montierten Zustand ist oder wird der Profilring 11 durch den Gehäusedeckel 7 gegen die Gelenkkugel 4 gedrückt und steht somit unter Druckspannung, sodass der Profilring 11 gegenüber seiner ursprünglichen Form verformt ist, was aus Fig. 2 ersichtlich ist. Fig. 3 zeigt den Profilring 11 hingegen vor der Montage in seinem unverformten Zustand, wobei Fig. 4 einen Schnitt durch den Profilring 11 entlang der aus Fig. 3 ersichtlichen Schnittlinie A-A und entlang der Rotationsachse 17 des Profilrings 11 zeigt, die im montierten Zustand des Profilrings 11 insbesondere mit der Mittellängsachse 16 zusammenfällt.

Aus den Fig. 3 und 4 ist ersichtlich, dass die Schmiermittelnuten 15 entlang des Umfangs des Profilrings 11 gleichmäßig verteilt angeordnet und gleichartig ausgebildet sind. Jede Schmiermittelnut 15 läuft um eine Außenseite 18 des Profilrings 11 herum bis zu einer Innenseite 19 des Profilrings 11. Dabei ist jede Schmiermittelnut 15 bis auf einen den Verlauf der jeweiligen Schmiermittelnut 15 unterbrechenden und an der Innenseite 19 des Profilrings 11 vorgesehenen Stützbereich 20 umlaufend ausgebildet, wobei der Stützbereich 20 bezüglich der Rotationsachse 17 umlaufend ausgebildet ist. Die Schmiermittelnuten 15 weisen somit jeweils einen C-förmigen Verlauf auf. Ferner verläuft jede Schmiermittelnut 15 vollständig in einer Nutebene, welche die Rotationsachse 17 umfasst. In Fig. 3 umfasst eine dieser Nutebenen z.B. die Rotationsachse 17 und die Schnittlinie A-A. Ferner ist der Profilring 11 zu einer quer zur Rotationsachse 17 verlaufenden Symmetrieebene spiegelsymmetrisch ausgebildet. Dabei nimmt der Innendurchmesser des Profilrings 11 vom Stützbereich 20 aus mit zunehmendem Abstand zum Stützbereich 20 in Richtung der Rotationsachse 17 zu, wobei der Profilring 11 am Stützbereich 20 seinen kleinsten Innendurchmesser aufweist. Ferner liegt der Stützbereich 20 in der Symmetrieebene. In Fig. 3 umfasst die Symmetrieebene z.B. die Schnittachse A-A und verläuft senkrecht zur Rotationsachse 17. An seiner Außenseite 18 weist der Profilring 11 eine bezüglich der Rotationsachse 17 umlaufende Nut 27 auf, die in der Symmetrieebene liegt und z.B. als zusätzliches Reservoir für Schmiermittel genutzt werden kann.

Aus Fig. 4 ist ersichtlich, dass der Profilring 11 im Bereich der Schmiermittelnuten 15 jeweils einen dreieckigen Querschnitt 21 aufweist, wobei eine der Dreiecksseiten 22 dieses Querschnitts 21 radial außen liegt und in Richtung der Rotationsachse 17 verläuft. Ferner liegt eine der Dreiecksseiten 22 gegenüberliegende Ecke 26 des Querschnitts 21 im Stützbereich 20, wobei die Ecke 26 abgerundet ist.

Zur Montage des Kugelgelenks 1 wird der Profilring 11 mit seiner aus den Fig. 3 und 4 ersichtlichen, ursprünglichen Form in dem Gelenkgehäuse 3 zwischen der Gelenkkugel 4 und dem Gehäusedeckel 7 angeordnet, was aus Fig. 5 ersichtlich ist. Anschließend wird der Gehäusedeckel 7 in die Montageöffnung 6 des Gelenkgehäuses 3 hineinangedrückt, sodass der Profilring 11 unter Druckspannung gesetzt wird und sich bis zu seiner aus Fig. 2 ersichtlichen Form verformt. Anschließend wird der die Montageöffnung 6 begrenzende Rand 23 des Gelenkgehäuses 3 nach innen über den Gehäusedeckel 7 gebogen, der dadurch an dem Gelenkgehäuse 3 festgelegt wird.

Im montierten Zustand liegt der Profilring 11 mit einem Anlagebereich 24 an der Gelenkkugel 4 an, der größer als der Stützbereich 20 ist, sodass der Stützbereich 20 innerhalb des Anlagebereichs 24 liegt. Die Schmiernuten 15 erstrecken sich somit bereichsweise in den Anlagebereich 24 hinein.

### Bezugszeichen

- 1: Kugelgelenk
- 2: Durchtrittsöffnung des Gelenkgehäuses
- 3: Gelenkgehäuse
- 4: Gelenkkugel des Kugelzapfens
- 5: Kugelzapfen
- 6: Montageöffnung des Gelenkgehäuses
- 7: Gehäusedeckel
- 8: Dichtungsbalg
- 9: Lagerschale
- 10: Zapfenbereich des Kugelzapfens
- 11: Profilring
- 12: Schmiermittelkammer
- 13: Schmiermittelventil
- 14: Zwischenraum
- 15: Schmiermittelnut im Profilring
- 16: Mittellängsachse des Kugelgelenks
- 17: Rotationsachse des Profilrings
- 18: Außenseite des Profilrings
- 19: Innenseite des Profilrings
- 20: Stützbereich des Profilrings
- 21: Querschnitt des Profilrings im Bereich einer Schmiermittelnut
- 22: Seite des Querschnitts
- 23: Rand des Gelenkgehäuses
- 24: Anlagebereich des Profilrings
- 25: Lagerbereich / Innenfläche der Lagerschale
- 26: Ecke des Querschnitts
- 27: Nut in Außenseite des Profilrings
- x: Längsrichtung

## Patentansprüche

1. Kugelgelenk mit einem einen Gehäuseboden (7) umfassenden Gelenkgehäuse (3), einem eine Gelenkkugel (4) umfassenden Gelenkinnenteil (5), welches mit seiner Gelenkkugel (4) in dem Gelenkgehäuse (3) angeordnet ist und sich aus diesem heraus erstreckt, einem elastischen und in dem Gelenkgehäuse (3) zwischen der Gelenkkugel (4) und dem Gehäuseboden (7) angeordneten Profilring (11), der aus einem Elastomer oder Gummi besteht und der an seiner Innenseite einen Anlagebereich (24) umfasst und mit diesem an der Gelenkkugel (4) abgestützt ist, wobei der Profilring (11) mit dem Anlagebereich (24) unmittelbar an der Gelenkkugel (4) abgestützt ist, einer in dem Gelenkgehäuse (3) zwischen der Gelenkkugel (4) und dem Gehäuseboden (7) vorgesehenen Schmiermittelkammer (12), einem in dem Gelenkgehäuse (3) auf einer dem Gehäuseboden (7) abgewandten Seite des Profilrings (11) vorgesehenen Lagerbereich (25), an welchem die Gelenkkugel (4) gelenkig gelagert ist, einem in dem Gelenkgehäuse (3) zwischen dem Profilring (11) und dem Lagerbereich (25) vorgesehenen Zwischenraum (14) und wenigstens einer in der Oberfläche des Profilrings (11) vorgesehenen und die Schmiermittelkammer (12) mit dem Zwischenraum (14) verbindenden Schmiermittelnut (15), die entlang einer dem Gelenkgehäuse (3) zugewandten Außenseite (18) des Profilrings (11) verläuft, **dadurch gekennzeichnet, dass** die Schmiermittelnut (15) sowohl im Bereich der Schmiermittelkammer (12) als auch im Bereich des Zwischenraums (14) bis zu der Innenseite (19) des Profilrings (11) und/oder bis zu dem Anlagebereich (24) verläuft.

2. Kugelgelenk nach Anspruch 1, **dadurch gekennzeichnet, dass** die Schmiermittelnut (15) insgesamt in einer die Rotationsachse (17) des Profilrings (11) umfassenden Ebene verläuft.

3. Kugelgelenk nach Anspruch 1 oder 2, **dadurch gekennzeichnet, dass** die Schmiermittelnut (15) bis auf einen den Verlauf der Schmiermittelnut (15) unterbrechenden und an der Innenseite (19) des Profilrings (11) vorgesehenen Stützbereich (20) umlaufend ausgebildet ist, sodass die Schmiermittelnut (15) sowohl im Bereich der Schmiermittelkammer (12) als auch im Bereich des Zwischenraums (14) am Stützbereich (20) endet.

4. Kugelgelenk nach Anspruch 3, **dadurch gekennzeichnet, dass** der Anlagebereich den Stützbereich (20) umfasst und der Profilring (11) zumindest mit dem Stützbereich (20) an der Gelenkkugel (4) abgestützt ist.

5. Kugelgelenk nach Anspruch 4, **dadurch gekennzeichnet, dass** der Stützbereich (20) bezüglich der Rotationsachse (17) des Profilrings (11) umlaufend ausgebildet ist.

6. Kugelgelenk nach Anspruch 4 oder 5, **dadurch gekennzeichnet, dass** der Stützbereich (20) innerhalb des Anlagebereichs (24) liegt, wobei sich die Schmiermittelnut (15) im Bereich der Schmiermittelkammer (12) und/oder im Bereich des Zwischenraums (14) in den Anlagebereich (24) hinein erstreckt.

7. Kugelgelenk nach einem der vorangehenden Ansprüche, **dadurch gekennzeichnet, dass** an dem Gehäuseboden (7) ein in die Schmiermittelkammer (12) mündendes und von außen zugängliches Schmiermittelventil (13) befestigt ist, durch welches hindurch Schmiermittel von außen in die Schmiermittelkammer (12) einbringbar ist.

8. Kugelgelenk nach einem der vorangehenden Ansprüche, **dadurch gekennzeichnet, dass** in das Gelenkgehäuse (3) eine den Lagerbereich (25) umfassende Lagerschale (9) eingesetzt ist.

9. Kugelgelenk nach einem der vorangehenden Ansprüche, **dadurch gekennzeichnet, dass** der Profilring (11) unter Druckspannung steht, gegenüber seiner ursprünglichen Form verformt ist und mit seinem Anlagebereich (24) gegen die Gelenkkugel (4) gedrückt ist.

## Claims

1. Ball joint having a joint housing (3) which comprises a housing bottom (7); a joint inner part (5) which comprises a joint ball (4), is arranged with its joint ball (4) in the joint housing (3), and extends out of the latter; an elastic profile ring (11) which is arranged in the joint housing (3) between the joint ball (4) and the housing bottom (7), consists of an elastomer or rubber, comprises a contact region (24) on its inner side, and is supported by way of the said contact region (24) on the joint ball (4), the profile ring (11) being supported directly on the joint ball (4) by way of the contact region (24); a lubricant chamber (12) which is provided in the joint housing (3) between the joint ball (4) and the housing bottom (7); a bearing region (25) which is provided in the joint housing (3) on a side of the profile ring (11), which side faces away from the housing bottom (7), on which bearing region (25) the joint ball (4) is mounted in an articulated manner; an intermediate space (14) which is provided in the joint housing (3) between the profile ring (11) and the bearing region (25); and at least one lubricant groove (15) which is provided in the surface of the profile ring (11), connects the lubricant chamber (12) to the intermediate space (14), and runs along an outer side (18) of the profile ring (11), which outer side (18) faces the joint housing (3), **characterized in that** the lubricant groove (15) runs as far as the inner side (19) of the profile ring (11) and/or as far as the contact region (24) both in the region of the lubricant chamber (12) and in the region of the intermediate space (14).

2. Ball joint according to Claim 1, **characterized in that** the lubricant groove (15) overall runs in a plane which includes the rotational axis (17) of the profile ring (11).

3. Ball joint according to Claim 1 or 2, **characterized in that** the lubricant groove (15) is of circumferential configuration apart from a supporting region (20) which interrupts the course of the lubricant groove (15) and is provided on the inner side (19) of the profile ring (11), with the result that the lubricant groove (15) ends on the supporting region (20) both in the region of the lubricant chamber (12) and in the region of the intermediate space (14).

4. Ball joint according to Claim 3, **characterized in that** the contact region comprises the supporting region (20), and the profile ring (11) is supported on the joint ball (4) at least by way of the supporting region (20).

5. Ball joint according to Claim 4, **characterized in that** the supporting region (20) is of circumferential configuration with regard to the rotational axis (17) of the profile ring (11).

6. Ball joint according to Claim 4 or 5, **characterized in that** the supporting region (20) lies within the contact region (24), the lubricant groove (15) extending into the contact region (24) in the region of the lubricant chamber (12) and/or in the region of the intermediate space (14).

7. Ball joint according to one of the preceding claims, **characterized in that** a lubricant valve (13) which opens into the lubricant chamber (12) and is accessible from the outside is fastened to the housing bottom (7), through which lubricant valve (13) lubricant can be introduced from the outside into the lubricant chamber (12) .

8. Ball joint according to one of the preceding claims, **characterized in that** a bearing shell (9) which comprises the bearing region (25) is inserted into the joint housing (3).

9. Ball joint according to one of the preceding claims, **characterized in that** the profile ring (11) is under compressive stress, is deformed with respect to its original shape, and is pressed with its contact region (24) against the joint ball (4).

## Revendications

1. Articulation à rotule comprenant un boîtier d'articulation (3) comportant un fond de boîtier (7), une partie intérieure d'articulation (5) comportant une rotule d'articulation (4), laquelle partie intérieure d'articulation est, par sa rotule d'articulation (4), disposée dans le boîtier d'articulation (3) et s'étend hors de celui-ci, une bague profilée (11) élastique et disposée dans le boîtier d'articulation (3) entre la rotule d'articulation (4) et le fond de boîtier (7), laquelle bague profilée est constituée d'un élastomère ou de caoutchouc et laquelle comporte, sur son côté intérieur, une région d'appui (24) et est supportée sur la rotule d'articulation (4) par cette région d'appui, la bague profilée (11) étant supportée directement sur la rotule d'articulation (4) par la région d'appui (24), une chambre de lubrifiant (12) prévue dans le boîtier d'articulation (3) entre la rotule d'articulation (4) et le fond de boîtier (7), une région de palier (25) prévue dans le boîtier d'articulation (3) sur un côté de la bague profilée (11) opposé au fond de boîtier (7), région de palier sur laquelle la rotule d'articulation (4) est montée de manière articulée, un espace intermédiaire (14) prévu dans le boîtier d'articulation (3) entre la bague profilée (11) et la région de palier (25), et au moins une rainure pour lubrifiant (15) prévue dans la surface de la bague profilée (11) et reliant la chambre de lubrifiant (12) à l'espace intermédiaire (14), laquelle rainure pour lubrifiant s'étend le long d'un côté extérieur (18) de la bague profilée (11) tourné vers le boîtier d'articulation (3), **caractérisée en ce que** la rainure pour lubrifiant (15) s'étend à la fois dans la région de la chambre de lubrifiant (12) et dans la région de l'espace intermédiaire (14) jusqu'au côté intérieur (19) de la bague profilée (11) et/ou jusqu'à la région d'appui (24).

2. Articulation à rotule selon la revendication 1, **caractérisée en ce que** la rainure pour lubrifiant (15) s'étend, dans son ensemble, dans un plan comportant l'axe de rotation (17) de la bague profilée (11).

3. Articulation à rotule selon la revendication 1 ou 2, **caractérisée en ce que** la rainure pour lubrifiant (15) est formée de manière périphérique à l'exception d'une région de support (20) interrompant le tracé de la rainure pour lubrifiant (15) et prévue sur le côté intérieur (19) de la bague profilée (11), de telle sorte que la rainure pour lubrifiant (15) se termine à la fois dans la région de la chambre de lubrifiant (12) et dans la région de l'espace intermédiaire (14) au niveau de la région de support (20).

4. Articulation à rotule selon la revendication 3, **caractérisée en ce que** la région d'appui comporte la région de support (20) et la bague profilée (11) est supportée sur la rotule d'articulation (4) au moins par la région de support (20).

5. Articulation à rotule selon la revendication 4, **caractérisée en ce que** la région de support (20) est formée de manière périphérique par rapport à l'axe de rotation (17) de la bague profilée (11).

6. Articulation à rotule selon la revendication 4 ou 5, **caractérisée en ce que** la région de support (20) se situe à l'intérieur de la région d'appui (24), la rainure pour lubrifiant (15) s'étendant à l'intérieur de la région d'appui (24) dans la région de la chambre de lubrifiant (12) et/ou dans la région de l'espace intermédiaire (14).

7. Articulation à rotule selon l'une des revendications précédentes, **caractérisée en ce qu'**une soupape de lubrifiant (13) accessible depuis l'extérieur et débouchant dans la chambre de lubrifiant (12) est fixée au fond de boîtier (7), soupape à travers laquelle du lubrifiant peut être introduit à partir de l'extérieur dans la chambre de lubrifiant (12).

8. Articulation à rotule selon l'une des revendications précédentes, **caractérisée en ce qu'**un coussinet de palier (9) comportant la région de palier (25) est inséré dans le boîtier d'articulation (3).

9. Articulation à rotule selon l'une des revendications précédentes, **caractérisée en ce que** la bague profilée (11) est sous contrainte de compression, est déformée par rapport à sa forme d'origine et est pressée contre la rotule d'articulation (4) par sa région d'appui (24).
